# EUROPEAN PATENT SPECIFICATION

(11) **EP 3 170 222 B1**
(45) Date of publication and mention of the grant of the patent: **15.01.2020**
(21) Application number: 15736767.3
(22) Date of filing: 30.06.2015
(51) Int. Cl.: H01M 10/0525, H01M 10/42, C09K 21/00

(54) **COMPOSITIONS FOR ABATING COMBUSTION OF LI-ION BATTERIES**
ZUSAMMENSETZUNGEN ZUR UNTERDRÜCKUNG DER VERBRENNUNG VON LI-IONEN-BATTERIEN
COMPOSITIONS POUR RÉDUIRE LA COMBUSTION DE BATTERIES LI-ION

(30) Priority: 14.07.2014 US 201462024112 P; 07.10.2014 US 201462060741 P
(43) Date of publication of application: 24.05.2017
(73) Proprietor: The Chemours Company FC, LLC, Wilmington DE 19801 (US)
(72) Inventor: KOUNTZ, Dennis J., West Chester, Pennsylvania 19382 (US); ENGLISH, Alan D., Chadds Ford, Pennsylvania 19317 (US); LEUNG, Lam H., Bear, Delaware 19701 (US); UNLU, Murat, Newark, Delaware 19702 (US)
(74) Representative: Heinemann, Monica
(86) International application number: PCT/US2015/038498
(87) International publication number: WO 2016/025099

(56) References cited:
- EP-A1- 1 709 648
- CN-A- 101 106 185
- US-A1- 2007 054 186
- US-A1- 2008 176 141
- US-A1- 2011 281 154
- US-A1- 2014 065 461
- US-B1- 8 309 240

## Description

### CROSS-REFERENCES TO RELATED APPLICATIONS

This application claims the benefit of U.S. Provisional Application No. 62/024,112, filed July 14, 2014, and U.S. Provisional Application 62/060,741, filed October 7, 2014.

### BACKGROUND INFORMATION

### Field of the Disclosure

This invention relates to compositions for abating combustion of Li-ion batteries, notably compositions comprising liquid fluoropolyethers.

### Description of the Related Art

U.S. Patent Publication 2014/0060859 discloses mixtures for abating combustion of Li-ion batteries. The composition of the mixtures comprises a thermally destabilizable fluoropolymer and a fluorinated composition. U.S. Patent Publication U.S. Patent 2014/0065461 discloses mixtures of fluorinated composition and other fluorinated material. In one embodiment the other fluorinated material is thermally destabilizable fluoropolymer. In another embodiment, the other fluorinated material is low molecular weight polytetrafluoroethylene, commonly known as PTFE micropowder. In both of these publications, the fluorinated material is preferably liquid under normal conditions of ambient temperature (15-25C°) and a pressure of one atmosphere (1Pa)). In both these publications, the fluorinated compositions are fluoropolyethers (FPE), preferably perfluoropolyethers (PFPE), and are considered as compositions because they are mixtures of FPEs and PFPEs, respectively, of different molecular weight. The combining of the other fluorinated material as a solid with the liquid fluorinated composition produces a mixture that is semi-solid in state. The mixtures comprising a thermally destabilizable fluoropolymer or PTFE micropowder and a fluorinated composition abate combustion of the Li-ion battery.

Combustion of the Li-ion battery occurs, for example, by its corruption (malfunctioning), such as by short circuiting within the battery, which is capable of producing a runaway thermal reaction that vaporizes combustible components within the battery, especially from the electrolyte separating each anode from each cathode of the battery. Combustion of the battery involves ignition of the combustible vapors, especially upon reaching oxygen present in air that comes into contact with the combustible vapors, either within the battery pack case within which the battery is housed or exterior to the battery pack from which the combustible vapors escape. By abatement of combustion is meant that the combustion never occurs even though the corruption of the Li-ion battery is such that the run-away exothermic reaction is expected, or if combustion commences, its intensity is reduced or the fire is very quickly extinguished. Reduced intensity means that when a plurality of Li-ion batteries is present within the case of a battery pack, the combustion tends to be limited to just the corrupted battery.

US 2007/054186 discloses an electrolyte composition for a lithium ion battery comprising a solvent composition showing reduced volatility, flammability and combustibility including at least one hydrofluoroether and at least one electrolyte salt. It further discloses that the electrolyte salts may comprise HSO4-, H2PO4- or halogen-substituted carborane anions.

### SUMMARY

While the combination of the thermally destabilizable fluoropolymer or PTFE micropowder with the fluorinated composition enhances the combustion abatement effect or the implementation of the fluorinated material as a semi-solid or both, it is desired to further enhance at least the combustion abatement effect of the fluorinated material. This is accomplished by the composition of the present invention, capable of abating combustion of a Li-ion battery, comprising liquid fluoropolyether and at least one combustion abatement agent being other than fluoropolymer, and additionally containing a Lewis acid as a decomposition catalyst. The combustion abatement agent is of course also different from the liquid fluoropolyether. The liquid fluoropolyether is a mixture of fluoropolyethers of different molecular weight as in the case of the fluorinated material described in U.S. Patent Publication 2014/0065461. The meaning of abatement of combustion herein is the same as stated above.

The composition of the present invention can be in the form (state) of a liquid (embodiment A) or a semi-solid (embodiment B).

By semi-solid (state) is meant, that the composition is not a liquid under the normal conditions of temperature and pressure mentioned above. Preferably, this semi-solid state persists at the higher temperatures encountered in the normal operation of that the Li-ion battery, including recharging, when the battery is a rechargeable battery. Normal operation of the battery can include ambient temperature (15-25°C) and higher temperatures up to 40°C, sometimes up to 50°C and even higher, e.g. temperatures up to 60°C and even up to 80°C and for simplicity, under a pressure of one atmosphere. The semi-solid state of the composition differs from the liquid state by not being flowable at any of these temperatures and pressure conditions. In contrast, the liquid state denotes flowability so as to take the shape of its container, while having a fixed volume. Instead of flowability, the semi-solid state of the composition means that it has rigidity, whereby it stays where it is positioned with respect to the battery. This positioning of the composition is facilitated by the characteristic of the semi-solid state of the mixture, namely that the mixture is flowable enough under applied pressure for achieving intimate contact with desired surfaces with respect to the battery. The applied pressure may be only that of a hand trowel used to apply and spread the semi-solid to achieve the contact desired. Once applied and the pressure is removed, the semi-solid state of the fluorinated material results in it not flowing away from its applied position under the normal conditions of the Li-ion battery. Characteristic of being semi-solid, the composition in this semi-solid state has the consistency of wax, dough, or putty, the stiffness of which can be controlled for example by the molecular weight of the fluoropolyether and solid additive to the composition to thicken it to become the semi-solid state when the fluoropolyether and solid additive are mixed together. In any event, the molecular weight of the fluoropolyether is low enough that it is in the liquid state under normal conditions and preferably under the normal operating conditions of the Li-ion battery, whereby the liquid fluoropolyether would have a boiling temperature (at one atm) greater than 80°C. The semi-solid state can be characterized by exhibition of a tensile strength of zero typically by virtue of the inability to form tensile test specimens that have sufficient integrity to be tensile strength tested.

Embodiment A has the advantage of giving the composition high mobility under the overheating accompanying corruption of the battery, thereby facilitating access of the composition to the area of overheating to abate combustion. Embodiment B has the advantage of the composition not being mobile under normal conditions.

With respect to both embodiments, the combustion abatement agent upon heating exhibits combustion abatement effect by such modes of action as (i) heat absorption, (ii) dilution of combustibles, (iii) becoming intumescent, (iv) forming char, and/or (v) depletion of combustibles. As such, the composition of the present invention is capable of responding to the corruption of the Li-ion battery with multiple modes of action, supplementing the combustion abatement effect of the fluoropolyether.

Embodiment B can be obtained such as by at least one of (a) at least one combustion abatement agent thickening the composition to be in said semi-solid state, (b) the composition containing solid fluoropolymer, (c) the solid fluoropolymer thickens said composition to be in said semi-solid state, (d) the combination of solid fluoropolymer and the at least one combustion abatement agent thickening said composition to be in said semi-solid state. The thickening is with respect to the liquid fluoropolyether, occurring by mixing together the liquid fluoropolyether and particulate thickening additive(s) so that the resultant composition is in the semi-solid state. The combustion abatement agent(s) used in the present invention is preferably a solid under normal conditions and preferably under the normal operation of the Li-ion battery. As a solid, the combustion abatement agent is able to provide the thickening effect when mixed with the liquid fluoropolyether.

The difference between the liquid state and the semi-solid state for the composition of the present invention, when the combustion abatement agent is the thickener is the amount of such agent present in the composition. For a given fluoropolyether, the amount of agent can be small enough to retain the liquid state of the fluoropolyether. Alternatively, the amount of agent can be large enough, i.e. effective, to combine with the liquid fluoropolyether to result in the semi-solid state for the composition. The combustion abatement agents used in the present invention are small molecule compounds, as compared to the molecular weight (size) of the solid fluoropolymers used in U. S. Patent Publications 2014/0060859 ad 2014/0065461 mentioned above. The modes of action described above accompany the decomposition of the combustion abatement agent, which can reverse the thickening effect of the agent, giving the fluoropolyether liquid mobility for carrying out its combustion abatement effect.

According to the present invention, an additional ingredient is incorporated, namely a decomposition catalyst which is a Lewis acid, into the liquid fluoropolyether/combustion abatement agent composition of the present invention. The decomposition catalyst operates thermally, i.e. in response to heating of the fluoropolyether as occurs upon corruption of the Li-ion battery, the catalyst catalyzing the decomposition of the fluoropolyether. The decomposition catalyst lowers the temperature of decomposition of the fluoropolyether, resulting in the earlier emission of non-combustible volatiles that abate combustion, either preventing it from occurring, confining it if it does occur, or extinguishing it if it does occur. In this regard, the fluoropolyether contributes at least mode of action (v) (depletion of combustibles) mentioned above to the abatement of combustion.

### DETAILED DESCRIPTION

With respect to the modes of action (i) to (v) of combustion abatement mentioned above, these are intended to be illustrative of the wide variety of combustion abatement agents that can be used as the combustion abatement agent component of the composition of the present invention. Concerning mode of action (i), agents that absorb heat contribute to the abatement of combustion by removing heat from the potential or actual combustion site within the Li-ion battery. Heat drives the combustion reaction. Removal of this heat abates the combustion. Concerning (ii), dilution of combustibles retards the combustion reactions by barring the combination of combustible species such as oxygen and hydrogen that would otherwise support the combustion process. Concerning (iii) and (iv), these are related in that the charring effect may be the result of intumescence exhibited by the combustion abatement agent when sufficiently heated. Intumescence, however, can be obtained without charring. In either case, preventing its spread or choking off the entry of oxygen (air) into the combustion zone. Thus the char and intumescent structure forms a barrier to combustion. Concerning (v), the non-combustible volatiles emitted by fluoropolyether combine with combustible active species such as oxygen and hydrogen to render them non-combustible. The liquid fluoropolyether exhibits the additional combustion abatement effect of preventing combustion from occurring when present at the combustion site before combustion begins.

With respect to the fluoropolyether component of the composition of the present invention, by itself is a liquid under normal conditions and preferably under normal operation of the Li-ion battery. This liquid state means that the fluorinated composition in the mixture does not emit volatiles during the temperatures up to 40°C, sometimes up to 50°C, or up to 60°C and even up to 80°C (one atmosphere pressure). The boiling temperature of the fluoropolyether is generally at least 100°C and more often at least 150°C (one atmosphere pressure).

The liquid state arises from the fluoropolyether having a low molecular weight relative to the molecular weight of solid fluoropolymer. Solid fluoropolymer will generally have a molecular weight of at least 50,000, while fluoropolyether will generally have a molecular weight in the range of 800 to 15,000 or 1,200 to 15,000. The preferred fluoropolyether (FPE) is the perfluoropolyether (PFPE). Any mention of fluoropolyethers (FPE) herein includes perfluoropolyethers (PFPE). The FPE is also a mixture of different molecular weights. In the PFPE, all monovalent substituents on chain carbon atoms are fluorine. The FPE is characterized by having a chain structure in which oxygen atoms in the backbone of the molecule are separated by saturated fluorocarbon groups having 1-3 carbon atoms, preferably perfluorocarbon groups as in the case of the PFPE. More than one type of fluorocarbon group may be present in the FPE molecule. Representative structures are:

(-CFCF3-CF2-O-)n (I)

(-CF2-CF2-CF2-O-)n (II)

(-CF2-CF2-O-)n-(-CF2-O-)m (III)

(-CF2-CFCF3-O-)n-(-CF2-O-)m (IV)

These structures are discussed by Kasai in J. Appl. Polymer Sci. 57, 797 (1995) and they are commercially available as certain KRYTOX® and FOMBLIN® lubricating oils. Preferably, the FPE has a carboxyl group at one end or at both ends of the chain structure of the FPE. For monocarboxyl FPE, the other end of the molecule is usually perfluorinated as in the case of PFPE but may contain a hydrogen atom. FPE, whether having a carboxyl group at one or both ends, have at least 2 ether oxygens, more preferably at least 4 ether oxygens, and even more preferably at least 6 ether oxygens, i.e. n in the formulae above is at least 2, 4, or 6 and m in the formulae above is at least 1, 2 or 3. Preferably, at least one of the fluorocarbon groups separating ether oxygens, and more preferably at least two of such fluorocarbon groups, has 2 or 3 carbon atoms. Even more preferably, at least 50% of the fluorocarbon groups separating ether oxygens have 2 or 3 carbon atoms. Also, preferably, the FPE has a total of at least 9 carbon atoms. The maximum value of n and m in the formulae above is preferably that which does not exceed the molecular weight at which the composition is liquid under normal conditions and preferably under normal operation of the Li-ion battery. While more than one FPE can be used in the semi-solid composition of the present invention, preferably only one such FPE is used. The FPE is a mixture of different molecular weights, a composition, wherein the n or m value given is the average number of n and m groups present in the FPE.

The FPE and especially the PFPE have high thermal stability. When thermally unstable end groups, such as carboxyl, are present in the FPE, the heat provided by the corrupted Li-ion battery, causes the decarboxylation of the FPE (and PFPE). This decarboxylation contributes non-flammable volatiles to abate combustion.

With respect to the combustion abatement agent other than fluoropolymer present in the composition of the present invention, including both embodiments A and B, these agents are solid under normal conditions and preferably under normal operation of the Li-ion battery. They are also particulate to facilitate mixing with the fluoropolyether. They are preferably compounds, thereby being small molecule, relative to polymers such as fluoropolymers that have a much higher molecular weight, i.e. the combustion abatement agent other than fluoropolymer is preferably non-polymeric. The combustion abatement agents are also preferably inorganic, i.e. an inorganic compound. Examples of combustion abatement agents include those compounds that, upon thermally-induced decomposition, emit water, nitrogen, nitrogen dioxide, carbon dioxide, or sulfur dioxide, which contribute to modes of action (i) and (ii). Examples of these compounds include hydrate, carbonate, bicarbonate, sulfate, bisulfite and bisulfate. Specific compounds include Al(OH)₃, sometimes represented as Al₂O₃·3H₂O, Mg(OH)₂, borax (Na₂B₂O₇·10H₂O), Zn borate, and sepiolite, a mineral that is hydrated magnesium silicate. The release of water from hydrates is considered decomposition. Al(OH)₃, for example releases water upon heating to about 180°C. Additional specific compounds include the alkali and alkaline earth metal carbonates, bicarbonates, sulfates, bisulfites and bisulfates, such as sodium, potassium, calcium and magnesium carbonate, bicarbonate, sulfate, bisulfite and bisulfate. Examples of nitrogen or nitrogen dioxide emitting compound include melamine and melamine cyanurate.

The combustion abatement agent can become a char and/or exhibit intumescence upon heating (modes (iii) and (iv)), such agents including sodium silicate, vermiculite and graphite. Except for graphite, these compounds are preferably inorganic. The combustion abatement agent can be a heat absorbing solid such as carbon. Carbon, including graphite, can be considered simply as a single element compound as distinguished from the inorganic compounds mentioned above.

The combustion abatement agent can be phosphorus containing, and preferably inorganic, such as ammonium polyphosphate ([NH₄PO₄]ₓ), alkali metal or alkaline earth metal orthophosphate or pyrophosphate, which contribute combustion abatement through mode of action (v). The combustion abatement agent can be an organic compound such as one that is bromine containing, examples of which are organic bromine-containing compounds such as carbon tetrabromide, tetrabromobisphenol A and tris(tribromoneopentyl) phosphate.

With respect to the addition of solid fluoropolymer to the composition of the present invention, preferably this aspect is practiced to obtain embodiment B. In one embodiment of this aspect, the solid fluoropolymer is low molecular weight polytetrafluoroethylene, which is commonly known as PTFE micropowder, so as to distinguish from polytetrafluoroethylene (PTFE), which has such a high molecular weight that it does not flow in the molten state described above. While the molecular weight of PTFE micropowder is low relative to PTFE, it is high enough to provide a solid polymer. As solid polymer, the PTFE micropowder is commercially available as a powder, which maintains is particulate state by not being putty-like like the semi-solid state. Instead, the PTFE micropowder in the powder state form consists of particles sufficiently hard that the PTFE micropowder in powder form is free flowing. The result of the lower molecular weight of PTFE micropowder than PTFE is that it has fluidity in the molten state, i.e. melt flowability. The melt flowability of PTFE micropowder can be characterized by a melt flow rate (MFR) of at least 0.01 g/10 min, preferably at least 0.1 g/10 min and more preferably at least 5 g/10 min, and still more preferably at least 10 g/10 min, as measured in accordance with ASTM D 1238, at 372°C using a 5 kg weight. The PTFE micropowder by itself is not melt fabricable, i.e. an article molded from the melt of PTFE micropowder is useless, by virtue of extreme brittleness. Because of its low molecular weight (relative to non-melt-flowable PTFE), it has no strength. An extruded filament of PTFE micropowder is so brittle that it breaks upon flexing.

In another embodiment of this aspect, the solid fluoropolymer is thermally destabilizable. This fluoropolymer can have a wide variety of identities to be described hereinafter, all of which are in the solid state. In general, the fluoropolymer has a carbon atom backbone as the polymer chain: -C-C-C-C-C-C-C-C-C-C-Cx-, wherein x is the number of additional carbon atoms present to provide together with the substituents on the polymer chain the molecular weight desired for the fluoropolymer, and making the fluoropolymer solid. Fluoropolymers having molecular weights of at least 50,000 (Mn) are commercially available, making it convenient to use these fluoropolymers in their thermally destabilizable form in the mixture of the present invention. Preferred fluoropolymers are those that are melt-processible tetrafluoroethylene copolymers, for example comprising at least 40-99 mol% tetrafluoroethylene (TFE) derived (by polymerization) repeat units and 1-60 mol% of units derived from at least one other comonomer. Preferred comonomers with TFE to form perfluoropolymers are perfluoroolefins having 3 to 8 carbon atoms, such as hexafluoropropylene (HFP), and/or perfluoro(alkyl vinyl ether) (PAVE) in which the linear or branched alkyl group contains 1 to 5 carbon atoms. Preferred PAVE monomers in these TFE copolymers and those described below are those in which the alkyl group contains 1, 2, or 3 carbon atoms, and the copolymer can be made using several PAVE monomers. Preferred TFE copolymers include FEP (TFE/HFP copolymer and TFE/HFP/PAVE copolymer) and PFA (TFE/PAVE copolymer), wherein PAVE is most preferably perfluoro(ethyl vinyl ether) (PEVE) or perfluoro(propyl vinyl ether) (PPVE), or the combination of perfluoro(methyl vinyl ether) (PMVE) and PPVE, i.e. TFE/PMVE/PPVE copolymer is sometimes referred to in this field as MFA. Less preferred is a fluoropolymer that has -CH₂- units in the polymer chain, such as THV (TFE/HFP/VF₂ copolymer). The FEP preferably contains 5 to 17 wt% HFP, the remainder being TFE, with PAVE content if present being 0.2 to 2 wt% based on the total weight of the FEP. The PFA preferably contains at least 2 wt% PAVE, the remainder being TFE, based on the total weight of the PFA.

Preferably, the fluoropolymer is at least 50 wt% fluorine, preferably at least 60 wt%, and more preferably at least 70 wt% fluorine, based on the total weight of the polymer chain (excludes end groups). In one embodiment of the present invention, if hydrogen is present in the repeat units making up the polymer chain, it is preferred that hydrogen is only mono-substituted on any of the carbon atoms making up the polymer chain or in any side group bonded to the polymer chain, since the presence of -CH₂- can impair the non-flammability of the fluoropolymer. Preferably, the hydrogen content, if any, is no greater than 2 wt%, more preferably no greater than 1 wt%, most preferably no greater than 0.5 wt%, based on the total weight of the fluoropolymer. A small amount of hydrogen along the polymer chain can have the beneficial effect of thermally destabilizing the fluoropolymer, thereby assisting its combustion abatement effect. In another embodiment of the present invention, the fluoropolymer is a perfluoropolymer. By perfluoropolymer is meant that the monovalent substituents on the carbon atoms forming the polymer chain of the polymer are all fluorine atoms, with the possible exception of end groups.

In contrast to the fluoropolyether component of the composition of the present invention, which is in the liquid state, the fluoropolymer addition to the composition of the present invention is in the solid state at least at the normal operating conditions encountered by the Li-ion battery, up to 40°C, sometimes up to 50°C and higher, e.g. up to 60°C and even up to 80°C at the pressure of one atmosphere. At higher temperatures, the fluoropolymer may melt. Preferably, however, the melting temperature of the fluoropolymer is at least 200°C and not greater than 315°C. Alternatively, the fluoropolymer may be one which softens upon heating, rather than having a distinct melting temperature. In either case, the fluoropolymer is preferably melt flowable. Nevertheless, the fluoropolymer remains solid at the normal operating conditions of the Li-ion battery. The melt flowability can be characterized by a melt flow rate (MF) of at least 0.01 g/10 min, preferably at least 0.1 g/10 min, more preferably at least 5 g/10 min or at least 10 g/10 min, all as measured in accordance with ASTM D 1238, under conditions of melt temperature and weight on the molten polymer that is prescribed for the particular fluoropolymer. For PFA and FEP, the prescribed temperature and weight is 372°C and 5 kg, respectively.

The fluoropolymers are known for their thermal stability, especially arising from the strong chemical bonding between carbon and fluorine atoms predominating in the fluoropolymer. It is common, however, for the as-polymerized fluoropolymer to have thermally unstable moieties, especially unstable end groups, arising from ingredients providing free radicals in the aqueous polymerization medium during the polymerization reaction. As many or more than a total of at least 300 unstable end groups, more often at least 400 such end groups -COOH, -COF, and/or -CONH₂ per 10⁶ carbon atoms can be present in the as-polymerized fluoropolymer. For example, the common persulfate polymerization initiator in the aqueous polymerization medium results in the formation of carboxyl end groups, -COOH, on the polymer chain. These groups decompose at elevated temperatures, indicating the thermal instability of the fluoropolymer. The decomposition is the splitting off of the carboxyl end groups, leaving behind the reactive group CF₂-, which can lead to the formation of a new unstable end group, perfluorovinyl, -CF=CF₂, extending into the polymer chain. Before such destabilizable fluoropolymers are made available by the manufacturer for commercial use, the fluoropolymer is subjected to a stabilization process that replaces unstable end groups by stable end groups. For example, FEP is subjected to humid heat treatment at high temperatures to replace unstable end groups by the relatively more stable -CF₂H end group. Both FEP and PFA are subjected to fluorination treatment to replace unstable end groups by the stable -CF₃ end group.

The destabilizable fluoropolymer used in the present invention is preferably not end-group stabilized, but is instead used in its thermally destabilizable form, i.e. the thermally unstable moieties such as the unstable end groups are present in the fluoropolymer. The heating up by the Li-ion battery caused by such corruption as improper recharging or short circuiting results in the heating of the fluoropolymer to cause decomposition of unstable moieties. This decomposition results in non-combustible volatiles being emitted from the fluoropolymer. These volatiles abate combustion, either preventing it from occurring, confining it if it does occur, or instantaneously extinguishing the fire. The combustion volatiles provide at least mode of action (v) in combustion abatement.

A preferred destabilizable fluoropolymer is the FEP mentioned above, but with end groups not being stabilized, so as to possess the unstable end groups mentioned above.

Another embodiment of thermally destabilizable fluoropolymer is the fluoropolymer that contains thermally destabilizable groups, such as -CH₂-CH₂- or -CH₂- in the polymer chain in the small amount as mentioned above that provides thermal decomposition of the fluoropolymer without imparting flammability to the fluoropolymer. Such thermally unstable groups can be present in combination with thermally unstable end groups such as disclosed above. A preferred thermally destabilizable fluoropolymer that contains at least polymer (main) chain thermally instability is the copolymer of TFE, HFP and ethylene, with the amount of ethylene in the copolymer being small to satisfy the preferred maximum hydrogen contents mentioned above. The TFE and HFP contents of the TFE/HFP/ethylene copolymer can be the same as for the FEP dipolymer mentioned above.

The destabilizable fluoropolymer is preferably one that becomes flowable under the heating provided by the corrupted Li-ion battery. In the case of fluoropolymers that have a melting temperature, such heating exceeds the melting temperature. The fluoropolymer either softens sufficiently upon such heating that it becomes molten and flowable or melts to become melt flowable. The heating provided by the corrupted battery changes the fluoropolymer from the solid state to the liquid state. This flowing of the fluoropolymer contributes to the exclusion of oxygen from combustible vapors arising from overheated electrolyte, and/or containment of the fire. The melt flow can be sufficient to seal the Li-ion battery from which combustible vapors would otherwise escape.

With respect to the thermally-induced catalyst that is incorporated into the composition of the present invention. The catalyst is Lewis acid, such as AlCl₃, BF₃, FeCl₃ and TiCl₄. These are preferably particulate solids under normal conditions. Only a small amount of catalyst is necessary to cause decomposition of the fluoropolyether upon its heating by the corrupted Li-ion battery. Preferably, the amount of catalyst, such as Lewis acid, present in the composition of the present invention is 0.1 to 2 wt% based on the weight of the fluoropolyether present in the composition.

The composition of the present invention can be made by a process comprising the step of mixing together the liquid fluoropolyether and the particulate combustion abatement agent. If solid fluoropolymer and/or catalyst are to be present in the composition, these can be included in the mixing step. The particles of the fluoropolymer can be those that result from the polymerization process to make the fluoropolymer. For example, aqueous dispersion polymerization typically results in the formation of fluoropolymer particles having an average particle size of no greater than 0.5 micrometers as measured by laser light scattering. Recovery of the fluoropolymer particles from the aqueous polymerization medium results in aggregation of the primary particles from the polymerization process to form secondary particles of agglomerated primary particles, the secondary particles typically having an average particle size of 200 to 800 micrometers as measured by laser light scattering (ASTM D 4464). The particle size of the combustion abatement agent, fluoropolymer, and catalyst is preferably that which is effective to produce a homogeneous semi-solid mixture with the liquid fluoropolyether. Preferably the average particle size (by light scattering according to ASTM D 4464) of these components is in the range of 0.1 to 800 micrometers).

The mixing step can be carried out at ambient temperature (15-25°C) for convenience. The mixing can be carried out by hand or by mechanical means. The components are added to the mixing vessel and subjected to mixing. Since a solid is being mixed preferably with a liquid, the mixture is complete when no concentration of either component is visible. Instead, a homogeneously appearing mixture, that is preferably semi-solid, is obtained. It is preferred that homogeneity is retained during the use of the composition over the life of the Li-ion battery, but this homogeneity can be unnecessary when the composition is applied in confinement with respect to the Li-ion battery. Confinement of the composition maintains the presence of the components of the composition even when separated within the confinement space.

With respect to proportions of components in the composition of the present invention, the amount of particulate solid materials or simply particulate solids, whether being combustion abatement agent other than fluoropolymer or the combination of such agent with fluoropolymer, present in the composition is preferably effective to convert the liquid state of the fluoropolyether to semi-solid composition. This amount will depend on the molecule weight of the fluoropolyether and the particle size of the solids present. The higher the molecular weight of the fluoropolyether, the higher is its viscosity, meaning that less of the particulate solids will be needed for the conversion to the semi-solid state. The smaller the particle size of the particulate solids, the less of these solids will be needed to accomplish this conversion. With respect to the particulate solids being combustion abatement agent other than fluoropolymer, it is preferred that the composition comprises at least 70 wt%, more preferably at least 60 wt%, and most preferably at least 50 wt% liquid fluoropolyether, the remainder to total 100 wt% being the particulate solids. It is also preferred that at least 3, 4, or 5 wt% of the composition comprises the particulate solids, the remainder to total 100 wt% being the liquid fluoropolyether, whereby the maximum amount of liquid fluoropolyether is 97 wt%, 96 wt%, and 95 wt%, respectively. Additional preferred minimums of particulate solids are at least 10 wt%, at least 15 wt%, at least 20 wt% at least 25 wt%, at least 30 wt%, at least 35 wt%, or at least 40 wt%, the remainder to total 100 wt% being the combination of the liquid fluoropolyether and particulate solids. In one embodiment, these composition ranges apply to the combustion abatement agent other than fluoropolymer as the particulate solid, i.e. the combination of liquid fluoropolyether and combustion abatement agent other than fluoropolymer totaling 100 wt%. In another embodiment, these composition ranges apply to the combination of liquid fluoropolyether, combustion abatement agent other than fluoropolymer and fluoropolymer, both being particulate solids, whether PTFE micropowder or thermally destabilizable fluoropolymer, this combination totaling 100 wt% of the composition. According to this embodiment, the weight% of particulate solids mentioned above apply to the combination of the combustion abatement agent other than fluoropolymer and fluoropolymer components of the composition with the proviso that at least 3, 4, or 5 wt%, at least 10 wt%, at least 20 wt%, at least 25 wt%, or at least 30 wt% of the weight of the composition is the combustion abatement agent other than fluoropolymer. Preferably, the fluoropolymer component comprises at least 50 wt% of the thermally destabilizable fluoropolymer. The decomposition catalyst amount, if any, in the composition is not included in these composition ranges. The catalyst amount is based on the weight of fluoropolyether as mentioned above.

Embodiment B of the compositions of the present invention can be used in place of the semi-solid fluorinated material disclosed in U.S. Patent Publication 2014/0065461. Embodiment A can be used in the same way, to flood the Li-ion battery surfaces, provided the battery case is leak-proof. Alternatively, the Embodiment A composition can be used to fill a void in the center pin of a Li-ion battery (jelly-roll type battery construction) as disclosed in U.S. Patent Publication 2011/0262783 assigned to Tesla Motors, Inc. or for encapsulation by stable polymer spheres dispersed in the anode and cathode layers of the battery as disclosed in U.S. Patent 8,309,240, assigned to HRL Laboratories, LLC.

### EXAMPLES

### EXAMPLE 1 (not according to the invention)

In this Example, the Li-ion batteries are in the array as shown in Fig. 3 of U.S. Patent Publication 2014/0065461. The batteries are 4.8v each, providing a voltage of 19.2 for the battery pack in a case. The composition is a semi-solid mixture comprising (a) the perfluoropolyether having the structure CF₃CF₂CF₂-O-(-CFCF₃-CF₂-O-)n-CFCF₃-COOH, wherein n is an average of 14, providing a molecular weight of about 2500, which is liquid at ambient temperatures and has a boiling temperature exceeding 100°C and (b) Al(OH)₃ as the combustion abatement agent. These components are blended together in a 80:20 wt. ratio at ambient temperature to form a semi-solid of the mixture and applied by hand troweling to the batteries and connectors (busses) within the battery pack case to achieve the coverage shown in Figs. 3 and 4 of US'461. The battery pack is equipped with thermocouples to monitor internal temperature at particular locations within the battery pack case. A nail is driven through the battery pack case to impale one of the Li-ion batteries to cause a short circuit. The impaled battery is one that is located adjacent to a thermocouple. The thermocouple reveals that the short circuiting of the battery by the nail is achieved, as the temperature measured by this thermocouple reveals a rapid increase in temperature. Vapor is visible exiting the case. The vapor ignites and it instantaneously doused by the semi-solid mixture coating. The same result is obtained when the Al(OH)₃ component is increased to 40 wt% of the mixture. The same result is obtained when the Al(OH)₃ content is increased to 30 wt% and 0.5 wt% AlCl₃ is added to the mixture, based on the weight of the PFPE.

### EXAMPLE 2 (not according to the invention)

Example 1 is repeated except that the combustion abatement agent is Mg(OH)₂ to obtain the same result.

### EXAMPLE 3 (not according to the invention)

Example 1 is repeated except that the combustion abatement agent is CaCO₃ to obtain the same result.

### EXAMPLE 4 (not according to the invention)

Example 1 is repeated except that the combustion abatement agent is NaHCO₃ to obtain the same result.

### EXAMPLE 5 (not according to the invention)

Example 1 is repeated except that the combustion abatement agent is K₂SO₄ to obtain the same result.

### EXAMPLE 6 (not according to the invention)

Example 1 is repeated except that the combustion abatement agent is KHSO4 to obtain the same result.

### EXAMPLE 7 (not according to the invention)

Example 1 is repeated except that the combustion abatement agent is vermiculite to obtain the same result.

### EXAMPLE 8 (not according to the invention)

Example 1 is repeated except that the combustion abatement agent is ammonium polyphosphate to obtain the same result.

### EXAMPLE 9 (not according to the invention)

Example 1 is repeated except that the combustion abatement agent is tris(tribromoneopentyl) phosphate to obtain the same result.

### EXAMPLE 10 (not according to the invention)

Example 9 is repeated except that the combustion abatement agent is tris(tribromoneopentyl) phosphate to obtain the same result. In addition, PTFE micropowder is added to the composition. The tris(tribromoneo-pentyl) phosphate constitutes 30 wt% of the mixture and the PTFE micropowder constitutes 20 wt% of the mixture, the remaining 50 wt% being the PFPE.

### EXAMPLE 11 (not according to the invention)

Example 1 is repeated except that the combustion abatement agent is sepiolite and its amount present in the mixture is 5 wt%, based on the combined weight of the sepiolite and perfluoropolyether, to obtain the same result.

The mixtures (compositions) used for combustion abatement in Examples 2-11 are all semi-solid. The average particle size of the combustion abatement agents used in these Examples is 1 to 50 micrometers as determined by laser light scattering in accordance with ASTM D 4464.

### EXAMPLE 12 (only according to the invention for the combination of liquid PFPE + Al(OH)₃ + AlCl₃)

A single Li-ion battery like each battery of Example 1 is pierced by a nail in the same manner as the impalement in Example 1 and then is immediately placed in a container of liquid PFPE of Example 1 containing a dispersion of 5 wt% Al(OH)₃ based on the total weight of the PFPE and Al(OH)₃. No ignition occurs. A similar result is obtained when the composition of this Example is placed in a chamber positioned inside the battery between the electrochemical region of the battery and a top vent of the battery. When pressure builds up within the battery due to its short-circuiting by the nail piercing, release of the pressure through the top vent breaches the chamber, resulting in the release of the liquid composition onto the electrochemical region of the battery, thereby preventing further heat up. These experiments are repeated but with 0.5 wt% AlCl₃, as a decomposition catalyst, either (i) replacing the Al(OH)₃, or (ii) being in addition to the Al(OH)3, to obtain the same results.

## Claims

1. Composition capable of abating combustion of a Li-ion battery, comprising liquid fluoropolyether and at least one combustion abatement agent being other than fluoropolymer and additionally containing a Lewis acid as a decomposition catalyst.

2. The composition of claim 1 wherein said composition is in the liquid state.

3. The composition of any one of claim 1 thickened to be in the semi-solid state.

4. The composition of claim 3 wherein said at least one combustion abatement agent thickens said composition to be in said semi-solid state.

5. The composition of any one of claims 3 or 4 containing solid fluoropolymer.

6. The composition of claim 5 wherein said solid fluoropolymer thickens said composition to be in said semi-solid state.

7. The composition of claim 5 wherein said solid fluoropolymer and said combustion abatement agent thicken said composition to be in said semi-solid state.

8. The composition of any one of claims 1 to 7 wherein said combustion abatement agent upon heating exhibits combustion abatement by (i) heat absorption, (ii) dilution of combustibles, (iii) becoming intumescent, (iv) forming char, and/or (v) depletion of combustibles.

9. The composition of any one of claims 1 to 8 wherein said combustion abatement agent, upon thermally-induced decomposition, emits water, nitrogen, nitrogen dioxide, carbon dioxide, or sulfur dioxide.

10. The composition of claim 1, wherein said combustion abatement agent is inorganic hydrate, carbonate, bicarbonate, sulfate, bisulfite, or bisulfate.

11. The composition of claim 1 wherein said combustion abatement agent is bromine containing.

12. The composition of claim 1 wherein said combustion abatement agent is carbon black or graphite.

13. The composition of any one of claims 1 to 8 wherein said combustion abatement agent is phosphorus containing.

14. The composition of claim 1 wherein said combustion abatement agent is inorganic.

15. The composition of any one of claims 1 to 14 wherein said decomposition catalyst is selected from a group consisting of: AlCl₃, BF₃, FeCl₃ and TiCl₄.

## Patentansprüche

1. Zusammensetzung, die in der Lage ist, die Verbrennung einer Li-Ionen-Batterie zu vermindern, umfassend flüssigen Fluorpolyether und mindestens ein anderes Mittel zur Verminderung der Verbrennung als Fluorpolymer und zusätzlich enthaltend eine LewisSäure als einen Zersetzungskatalysator.

2. Zusammensetzung nach Anspruch 1, wobei die Zusammensetzung im flüssigen Zustand ist.

3. Zusammensetzung nach Anspruch 1, die eingedickt ist, um sich im halbfesten Zustand zu befinden.

4. Zusammensetzung nach Anspruch 3, wobei das mindestens eine Mittel zur Verminderung der Verbrennung die Zusammensetzung eindickt, so dass sie sich im halbfesten Zustand befindet.

5. Zusammensetzung nach einem der Ansprüche 3 oder 4, die festes Fluorpolymer enthält.

6. Zusammensetzung nach Anspruch 5, wobei das feste Fluorpolymer die Zusammensetzung eindickt, so dass sie sich im halbfesten Zustand befindet.

7. Zusammensetzung nach Anspruch 5, wobei das feste Fluorpolymer und das Mittel zur Verminderung der Verbrennung die Zusammensetzung eindicken, so dass sie sich im halbfesten Zustand befindet.

8. Zusammensetzung nach einem der Ansprüche 1 bis 7, wobei das Mittel zur Verminderung der Verbrennung beim Erhitzen eine Verminderung der Verbrennung zeigt, durch (i) Wärmeabsorption, (ii) Verdünnung von brennbaren Stoffen, (iii) Intumeszenz, (iv) Bilden von Teer und/oder (v) Abreicherung von brennbaren Stoffen.

9. Zusammensetzung nach einem der Ansprüche 1 bis 8, wobei das Mittel zur Verminderung der Verbrennung bei thermisch induzierter Zersetzung Wasser, Stickstoff, Stickstoffdioxid, Kohlendioxid oder Schwefeldioxid emittiert.

10. Zusammensetzung nach Anspruch 1, wobei das Mittel zur Verminderung der Verbrennung anorganisches Hydrat, Carbonat, Hydrogencarbonat, Sulfat, Hydrogensulfit oder Hydrogensulfat ist.

11. Zusammensetzung nach Anspruch 1, wobei das Mittel zur Verminderung der Verbrennung Brom enthält.

12. Zusammensetzung nach Anspruch 1, wobei das Mittel zur Verminderung der Verbrennung Ruß oder Graphit ist.

13. Zusammensetzung nach einem der Ansprüche 1 bis 8, wobei das Mittel zur Verminderung der Verbrennung phosphorhaltig ist.

14. Zusammensetzung nach Anspruch 1, wobei das Mittel zur Verminderung der Verbrennung anorganisch ist.

15. Zusammensetzung nach einem der Ansprüche 1 bis 14, wobei der Zersetzungskatalysator ausgewählt ist aus der Gruppe bestehend aus AlCl₃, BF₃, FeCl₃ und TiCl₄.

## Revendications

1. Composition capable de réduire la combustion d'une batterie Li-ion, comprenant un fluoropolyéther liquide et au moins un agent de réduction de combustion qui est autre qu'un fluoropolymère et contenant en outre un acide de Lewis en tant que catalyseur de décomposition.

2. Composition selon la revendication 1, où ladite composition est à l'état liquide.

3. Composition selon la revendication 1, épaissie pour qu'elle soit à l'état semi-solide.

4. Composition selon la revendication 3, où ledit au moins un agent de réduction de combustion épaissit ladite composition pour qu'elle soit audit état semi-solide.

5. Composition selon l'une quelconque des revendications 3 ou 4, contenant un fluoropolymère solide.

6. Composition selon la revendication 5, où ledit fluoropolymère solide épaissit ladite composition pour qu'elle soit audit état semi-solide.

7. Composition selon la revendication 5, où ledit fluoropolymère solide et ledit agent de réduction de combustion épaississent ladite composition pour qu'elle soit audit état semi-solide.

8. Composition selon l'une quelconque des revendications 1 à 7, dans laquelle ledit agent de réduction de combustion à la suite d'un chauffage montre une réduction de combustion (i) par absorption de chaleur, (ii) par dilution de combustibles, (iii) en devenant intumescent, (iv) en formant un charbon et/ou (v) par appauvrissement de combustibles.

9. Composition selon l'une quelconque des revendications 1 à 8, dans laquelle ledit agent de réduction de combustion, à la suite d'une décomposition induite thermiquement, émet de l'eau, de l'azote, du dioxyde d'azote, du dioxyde de carbone ou du dioxyde de soufre.

10. Composition selon la revendication 1, dans laquelle ledit agent de réduction de combustion est un hydrate inorganique, un carbonate, un bicarbonate, un sulfate, un bisulfite ou un bisulfate.

11. Composition selon la revendication 1, dans laquelle ledit agent de réduction de combustion contient du brome.

12. Composition selon la revendication 1, dans laquelle ledit agent de réduction de combustion est un noir de carbone ou un graphite.

13. Composition selon l'une quelconque des revendications 1 à 8, dans laquelle ledit agent de réduction de combustion contient du phosphore.

14. Composition selon la revendication 1, dans laquelle ledit agent de réduction de combustion est inorganique.

15. Composition selon l'une quelconque des revendications 1 à 14, dans laquelle ledit catalyseur de décomposition est choisi dans le groupe constitué de: AlCl₃, BF₃, FeCl₃ et TiCl₄.
